# EUROPÄISCHE PATENTSCHRIFT

(11) **EP 0 748 942 B1**
(45) Veröffentlichungstag und Bekanntmachung des Hinweises auf die Patenterteilung: **26.01.2000**
(21) Anmeldenummer: 96108586.7
(22) Anmeldetag: 30.05.1996
(51) Int. Cl.: F16B 4/00, F16B 7/04

(54) **Verbindungssystem und Verfahren zum lösbaren festen Verbinden zweier Bauteile**
Connecting system and process for releasably connecting two elements
Système de fixation et procédé pour fixer deux pièces de façon détachable

(30) Priorität: 14.06.1995 DE 19521755
(43) Veröffentlichungstag der Anmeldung: 18.12.1996
(73) Patentinhaber: Schunk GmbH & Co KG Fabrik für Spann- und Greifwerkzeuge, 74348 Lauffen (DE)
(72) Erfinder: Retzbach, Thomas, 74357 Bönnigheim (DE)
(74) Vertreter: Beetz & Partner Patentanwälte

(56) Entgegenhaltungen:
- EP-A- 0 058 309
- CH-A- 567 191

## Beschreibung

Die Erfindung betrifft ein Verbindungssystem zum lösbaren und wiederholbaren festen Verbinden zweier Bauteile der im Oberbegriff des Patentanspruchs 1 angegebenen Gattung. Ferner bezieht sich die Erfindung auf ein Verfahren zum Lösen und festen Verbinden zweier Bauteile gemäß dem Oberbegriff des Patentanspruchs 7.

Es sind eine Vielzahl von unterschiedlichen Preßfüge-Systemen bekannt, mit denen meist rotationssymmetrische Bauteile miteinander dauerhaft oder nur zeitweise fest miteinander verbunden werden können. Zu diesen bekannten Fügesystemen gehören beispielsweise Spannzangen und Spreizdorne zur zentrierten Befestigung von Werkzeugen oder Werkstücken, bei denen die meist als Spannbacken ausgebildeten Fixierelemente in axialer Richtung mechanisch oder hydraulisch gegen entsprechend ausgebildete Konusflächen gepreßt werden. Bei diesen im Maschinenbau weit verbreiteten Spannsystemen ergeben sich die Nachteile von relativ großen radialen Abmessungen, durch die axialen Gleitbewegungen zwischen den konischen Gleitflächenpaaren verursachten relativ hohen Reibungswerte sowie Rundungenauigkeiten.

Zur reproduzierbaren und hochgenauen Befestigung eines Bauteils in oder an einem anderen Bauteil werden hydraulische Dehnspannsysteme als Futter oder Dorne eingesetzt, bei denen die Spannkraft über ein Druckmedium und eine radial verformbare Dehnbüchse auf das zu fixierende Bauteil übertragen wird. Diese Spannsysteme sind regelmäßig mit einem hohen technischen Aufwand verbunden.

Ferner sind Systeme zur Herstellung von Preßverbindungen zwischen zwei rotationssymmetrischen Bauteilen bekannt, bei denen der Außendurchmesser des meist zylindrischen Innenteils geringfügig größer als der Innendurchmesser des hohlzylindrischen Außenteils ist. Durch thermische Behandlung eines oder auch beider Bauteile erfolgt eine Anpassung der wirksamen Durchmesser der Bauteile, so daß das innere Bauteil in das äußere eingeschoben und in der Verbindungslage positioniert werden kann, woraufhin dann nach Beendigung der thermischen Behandlung eine Dehnung oder Schrumpfung des jeweiligen Bauteils erfolgt, die einen hochfesten Klemmsitz des äußeren Bauteils auf dem inneren Bauteil ergibt. Nachteilig bei diesem Verbindungssystem sind die für die thermische Behandlung, d.h. für die mitunter erhebliche Erwärmung oder Unterkühlung des einen Bauteils notwendigen Maßnahmen, ggf. beim Erwärmen auftretende Gefügeumwandlungen, Verletzungsgefahren durch Verbrennungen sowie auch die zur Herstellung der fertigen Verbindung notwendigen Zeitspannen für das gleichmäßige Erwärmen bzw. Abkühlen der jeweiligen Schrumpfpartner.

Aus der DE-Z "Werkstattstechnik, 51. Jhg., Aug. 1961, S. 392 bis 396, sind Ölpreßverbindungen z.B. zwischen einer Welle und einer Nabe bekannt, bei der die Paßflächen während des Füge- oder Lösevorganges durch Drucköl voneinander getrennt werden. Das zwischen die Paßflächen der beiden Bauteile eingepreßte Öl bewirkt eine elastische Aufweitung des hohlzylindrischen Bauteils, die z.B. ein Herausziehen des inneren vollzylindrischen Bauteils ermöglicht. Hierzu sind allerdings sehr hohe Öldrücke bis zu 1,5·e⁸ Pa (1500 atü) erforderlich, die nur mit technisch anspruchsvollen und damit kostspieligen Einrichtungen erzeugt werden können. Darüber hinaus ist diese Fügetechnik auf zylindrische Paßflächen beschränkt.

Aufgabe der Erfindung ist es, ein Verbindungssystem zum Vrbinden zweier Bauteile, zu schaffen, das auf technisch einfache Weise eine beliebig wiederholbare sehr genaue Verbindung von Bauteilen unterschiedlicher Querschnitte ermöglicht.

Diese Aufgabe wird erfindungsgemäß dadurch gelöst, daß die ursprüngliche Umfangskontur des verformbaren Bauteils Abschnitte aufweist, die einerseits innerhalb und andererseits außerhalb der Umfangskontur des anderen Bauteils liegen, daß die Verformung des einen Bauteils durch gezielte Einwirkung von radialen Druckkräften auf bestimmte Umfangsabschnitte seiner Umfangskontur erfolgt und daß die feste gegenseitige Druckanlage der beiden Umfangskonturen in vorbestimmten Umfangsabschnitten durch elastische Rückverformung des verformten Bauteils erfolgt.

Das der Erfindung zugrunde liegende technische Konzept besteht somit darin, daß zumindest eines der Bauteile in gewissen Grenzen elastisch verformbar ist und eine gegenüber dem anderen Bauteil unterschiedliche Umfangskontur aufweist, wobei durch radial gerichtete Druckkräfte dieses Bauteil in seinem Verbindungsabschnitt so verformt wird, daß die Form seiner Umfangskontur mit ausreichendem Spiel in etwa derjenigen der wirksamen Umfangskontur des anderen Bauteils entspricht, so daß beide Bauteile ineinander positioniert werden können, wobei nach Beendigung der radialen Druckeinwirkung eine selbsttätige elastische Rückverformung des verformten Bauteiles erfolgt, die zu einer hochfesten Druckanlage bestimmter Umfangsabschnitte dieses rückverformten Bauteiles an der Umfangskontur des anderen Bauteiles zur Folge hat.

Das erfindungsgemäße Verbindungssystem läßt sich zum Befestigen von unterschiedlich geformten Bauteilen auf verschiedene Weise anwenden. So wird gemäß einer zweckmäßigen Ausgestaltung der Erfindung zum Befestigen eines das verformbare Bauteil bildenden Hohlkörpers auf einem massiven Schaft der Hohlkörper mit einer mehrseitigen inneren Umfangskontur aus jeweils bogenförmigen Seitenflächen und Übergangsabschnitten versehen, wobei durch die auf den Hohlkörper radial von außen einwirkenden Druckkräfte diese innere Umfangskontur bis zur Kongruenz mit der äußeren Umfangskontur des massiven Schaftes elastisch derart verformt wird, daß der Hohlkörper auf den Schaft in seine vorbestimmte Position aufgeschoben werden kann. Nach Beendigung des radialen Preßdruckes ist der Hohlkörper aufgrund seiner Eigenelastizität bestrebt, sich in seine ursprüngliche Umfangskontur rückzuverformen, wodurch bestimmte Umfangsabschnitte gegen die Außenwandung des massiven Schaftes gepreßt werden.

Eine hochgenaue Zentrierung des Hohlkörpers, insbesondere von relativ dünnwandigen Hülsen aus Stahl oder dergleichen, auf dem Schaft läßt sich dadurch erreichen, daß eine solche Druckanlage in drei gegeneinander winkelversetzten Umfangsabschnitten zustande kommt. Zu diesem Zweck weist die wirksame innere Umfangskontur der noch unverformten Hülse drei gewölbte Seitenflächen auf, die über drei eckseitige Übergangsbögen ineinander übergehen, wobei die nach radial innen auf diese Übergangsbögen einwirkenden Radialkräfte die innere Umfangskontur der Hülse etwa zur Kreisform verformen, wobei der Durchmesser dieser Kreisform geringfügig größer als der Außendurchmesser des Schaftes ist und die so verformte Hülse auf den Schaft aufgeschoben werden kann. Nach Beendigung der Krafteinwirkung erfolgt eine selbsttätige Rückverformung der positionierten Hülse, wodurch die Hülse jeweils im Bereich der drei gewölbten Seitenflächen mit hohem Andruck gegen die Außenwandung des Schaftes gedrückt wird. Die so hergestellte Verbindung kann auch sehr hohen Belastungen widerstehen und ist u.a. zum Einspannen von Werkzeugschäften in hülsen- oder buchsenförmige Werkzeughalter bei der spanenden Werkstückbearbeitung besonders geeignet.

Das erfindungsgemäße Verbindungssystem ist auch zum Befestigen eines das verformbare Bauteil bildenden Hohlkörpers in einer Ausnehmung eines anderen Bauteils geeignet. Zu diesem Zweck weist die äußere ursprüngliche Umfangskontur des Hohlkörpers Umfangsabschnitte auf, die einerseits innerhalb und andererseits außerhalb der inneren Umfangskontur der Ausnehmung liegen, wobei die Radialkräfte von innen nach außen auf die innerhalb liegenden Umfangsabschnitte einwirken und damit die Umfangskontur des Hohlkörpers so verformen, daß der Hohlkörper in die Ausnehmung eingeschoben werden kann. Nach Beendigung der Krafteinwirkung erfolgt die elastische Rückverformung des Hohlkörpers in seine ursprüngliche Umfangskontur, wobei die ursprünglich außerhalb liegenden Abschnitte in feste Druckanlage an die Innenwandung der Ausnehmung gelangen.

Neben der genauen Achszentrierung beider Bauteile und dem hohen Aufnahmevermögen auch wechselnder mechanischer Beanspruchungen liegt ein weiterer Vorteil des erfindungsgemäßen Verbindungssystems in der technisch einfachen und schnellen Herstellung der Verbindung. Die zur Verformung des einen Bauteils notwendigen Radialkräfte können mittels geeigneter Einrichtungen schnell aufgebaut und nach dem relativen Positionieren der beiden Bauteile ebenso schnell wieder abgebaut werden, so daß für die Durchführung eines Verbindungsvorgangs nur eine sehr kurze Zeitspanne benötigt wird, die im Bereich des Einspannens eines Werkzeugschaftes in ein herkömmliches Klemmbackenfutter liegt und um ein Vielfaches kürzer als die Herstellung einer thermischen Schrumpfverbindung ist. Besonders vorteilhaft für die praktische Anwendung des erfindungsgemäßen Verbindungssystems ist ferner, daß die festen Verbindungen nach beliebig langen Betriebszeiten auf gleich einfache Weise wieder gelöst werden können. Zu diesem Zweck ist lediglich eine erneute Einwirkung der Radialkräfte auf die vorgegebenen Bereiche des verformbaren Bauteils erforderlich, das nach der entsprechenden Verformung von dem anderen Bauteil abgezogen werden kann. Da die Größe der jeweils notwendigen Verformung im elastischen Bereich des verwendeten Werkstoffs liegt, können die Verbindungs- und Lösevorgänge beliebig oft wiederholt werden, ohne daß es zu den beim thermischen Schrumpfen auftretenden Änderungen in den Materialeigenschaften, insbesondere in der Gefügestruktur, kommt.

Bei einem Verfahren zum lösbaren festen Verbinden zweier Bauteile, von denen zumindest eines in vorgegebenem Maße elastisch verformbar ist, wird zumindest eines der Bauteile während des Verbindungsvorganges verformt und gegenüber dem anderen Bauteil in der vorgesehenen Verbindungslage positioniert, woraufhin durch eine anschließende Rückverformung dieses verformten Bauteils die feste Verbindung hergestellt wird. Gemäß der Erfindung wird an zumindest einem der Bauteile eine wirksame Umfangskontur hergestellt, die innerhalb und außerhalb der wirksamen Umfangskontur des anderen Bauteils liegende Umfangsabschnitte aufweist. Auf vorbestimmte Umfangsabschnitte der Umfangskontur des verformbaren Bauteils werden Radialkräfte K ausgeübt und nach der gegenseitigen Positionierung der beiden Bauteile werden die den Radialkräften nicht ausgesetzten Umfangsabschnitte durch elastische Rückverformung des verformten Bauteils in feste Druckanlage mit der Umfangskontur des anderen Bauteils gebracht. Zum wiederholbaren Befestigen eines verformbaren Hohlkörpers auf einem Schaft wird die innere Umfangskontur des Hohlkörpers mit den innerhalb und außerhalb liegenden Umfangsabschnitten versehen und die Radialkräfte werden von außen nach innen gerichtet auf die außerhalb liegenden Umfangsabschnitte zur Einwirkung gebracht.

Zum wiederholbaren Befestigen eines elastisch verformbaren Hohlkörpers in einer Ausnehmung eines Bauteils wird die äußere Umfangskontur des Hohlkörpers mit den innerhalb und außerhalb liegenden Umfangsabschnitten versehen und die Radialkräfte werden von innen nach außen gerichtet auf die innerhalb liegenden Umfangsabschnitte zur Einwirkung gebracht. Dieses Verfahren eignet sich beispielsweise zur Befestigung von Wärmetauscherrohren in Stützwänden und oder -trägern.

Gegenstand der Erfindung ist ferner eine Vorrichtung zum Befestigen eines verformbaren Hohlkörpers auf einen Schaft, bestehend aus einem vorzugsweise zylindrischen Gehäuse mit einer zentralen Ausnehmung, mehreren in der Ausnehmung gegeneinander winkelversetzt angeordneten Preßbacken und aus einer Spannvorrichtung zum zwangsweisen Verschieben dieser Preßbacken. Erfindungsgemäß weisen die Preßbacken an ihrer inneren Umfangsfläche jeweils einen Ansatz auf, der einem außerhalb der Umfangskontur der Ausnehmung befindlichen Umfangsabschnitt des Hohlkörpers gegenüberliegt, wobei die Spannvorrichtung zum Erzeugen eines auf jede Preßbacke einwirkenden nach radial innen gerichteten Druckes ausgebildet ist, so daß der radial innere Ansatz jeder Preßbacke bei Betätigung der Spannvorrichtung gegen diesen nach außen vorstehenden Umfangsabschnitt des Hohlkörpers gepreßt wird. Dieser Vorrichtung ist jeder Preßbacke eine hydromechanisch ausgebildete Spannvorrichtung zugeordnet, wobei an der radialen Außenseite jeder Klemmbacke eine hydraulische Druckkammer und im Gehäuse je ein radial bewegbares Stellglied angeordnet sind.

Aufgrund der besonderen Vorteile dieser Vorrichtung, insbesondere die einfache Betätigung der vorzugsweise als Schraubbolzen ausgebildeten Stellglieder, sowie ihre geringen Abmessungen, eignet sich die Vorrichtung besonders zum Einspannen von schmalen Werkzeugschäften in dünnwandige Hülsen von Werkzeugaufnahmen. Aufgrund der verwendeten Materialien von Bohrerschaft und Werkzeughülse ergeben sich hohe bleibende Spannkräfte, die eine genau achszentrierte Positionierung des Bohrerschaftes bewirken und hohen mechanischen Beanspruchungen widerstehen. Nach dem unter der Wirkung der Spannvorrichtung erfolgten Verformen der verformbaren Hülse und nach dem Einschieben des Schaftes in den dann etwa kreisförmigen Innenraum der Hülse werden die vorzugsweise als Schraubbolzen ausgebildeten Stellglieder der Spannvorrichtung in ihre Ausgangslage zurückgedreht, wodurch die Einwirkung der Klemmbacken auf die Hülse beendet wird und diese Hülse bestrebt ist, ihre ursprüngliche Form wieder einzunehmen. Diese radiale Rückverformung bewirkt eine feste Anpressung der abgeflachten vorstehenden inneren Umfangsabschnitte der Hülse gegen die Außenwandung des Schaftes. Danach kann die Spannvorrichtung von der nunmehr fertiggestellten Baugruppe axial abgezogen werden.

Weitere Besonderheiten und Vorzüge der Erfindung lassen sich in der folgenden Beschreibung von in der Zeichnung dargestellten Ausführungsbeispielen entnehmen. Es zeigen:
- Fig. 1: schematisch eine mit einem zylindrischen Schaft zu verbindende Hülse im Querschnitt;
- Fig. 2: schematisch eine in einer zylindrischen Werkstückausnehmung zu befestigende Hülse;
- Fig. 3: die Wirkungsweise des erfindungsgemäßen Verbindungssystems in verschiedenen Phasen beim Befestigen der Hülse auf dem zylindrischen Schaft gemäß Fig. 1;
- Fig. 4a, b: eine Vorrichtung zum Befestigen der Hülse auf einem Schaft gemäß Fig. 3 im Axialschnitt und in Draufsicht.

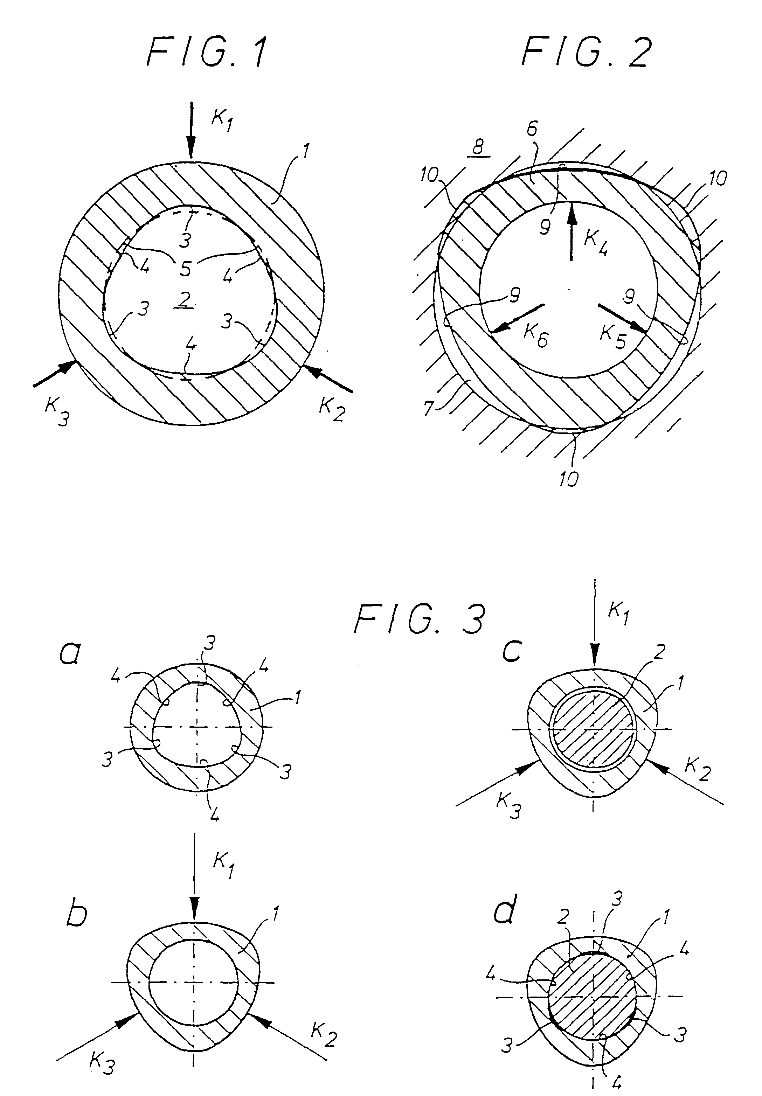

Nach Fig. 1 soll eine Hülse 1 mit zylindrischer Außenfläche auf einem zylindrischen Schaft 2 befestigt werden. In Anwendung des erfindungsgemäßen Konzepts hat die Hülse 1 eine polygonähnliche innere Umfangskontur, die sich aus mehreren bogenförmigen Abschnitten 3, 4 zusammensetzt. Wie dargestellt, liegen jeweils drei Abschnitte 3 radial außerhalb und die drei zwischengeordneten Übergangsabschnitte 4 dieser Umfangskontur radial innerhalb des durch einen Kreis 5 gestrichelt angedeuteten Umfang des zylindrischen Schaftes 2. Ein Aufschieben der Hülse 1 auf den Schaft in diesem Zustand ist wegen der radial innerhalb des Kreises 5 liegenden Abschnitte 4 nicht möglich.

Eine noch unverformte Hülse 1 ist in Fig. 3a gezeigt. Wenn nun auf den Außenumfang der Hülse 1 in den außerhalb des Kreises 5 liegenden Umfangsabschnitten 3 Radialkräfte K₁, K₂ und K₃ einwirken, erfolgt eine gezielte Verformung der Hülse insgesamt, indem die bisher außerhalb des Kreises 5 befindlichen Umfangsabschnitte 3 nach radial einwärts gedrückt werden, was eine begrenzte radiale Auswärtsbewegung der nach wie vor innerhalb des Kreises 5 befindlichen Umfangsabschnitte 4 zur Folge hat. In diesem in Fig. 3b dargestellten Zustand ist die ursprünglich etwa polygonähnliche innere Umfangskontur der Hülse etwa zu einem Kreis verformt worden, dessen Durchmesser größer als der durch die Kreislinie 5 in Fig. 1 angegebene Durchmesser des Schaftes 2 ist, wobei die Außenwand der Hülse eine polygonähnliche Form angenommen hat. In diesem verformten Zustand kann die Hülse 1 auf den Schaft 3 aufgeschoben und in der vorgegebenen Stellung positioniert werden, wie in Fig. 3c gezeigt. Durch Beendigen der Einwirkung der Kräfte K₁ bis K₃ erfolgt eine Rückverformung in der Hülse 1 aufgrund ihrer Eigenelastizität, wodurch die ursprünglich innerhalb des Kreises 5 in Fig. 1 liegenden Umfangsabschnitte 4 in eine hochfeste Druckanlage an der Außenwand des Schaftes 2 gelangen. Dieser Endzustand ist in Fig. 3d dargestellt.

Das erfindungsgemäße Verbindungssystem kann auch zur genauen Befestigung einer Hülse in einer Ausnehmung eines Bauteils verwendet werden, wie dies in Fig. 2 schematisch dargestellt ist. Bei diesem dargestellten Anwendungsbeispiel hat die Hülse 6 eine polygonähnliche äußere Umfangskontur und die Ausnehmung 7 im Bauteil 8 einen zylindrischen Querschnitt. Aus Gründen der günstigen Zentrierung weist auch bei diesem Anwendungsbeispiel die äußere Umfangskontur der unverformten Hülse drei innerhalb der kreisförmigen Umfangskontur der Ausnehmung 7 befindliche Abschnitte 9 auf, zwischen denen bogenförmige Übergangsabschnitte 10 liegen, die sich außerhalb dieser zylindrischen Umfangskontur befinden. Durch die in Fig. 2 dargestellten nach außen wirkenden Radialkräfte K₄, K₅ und K₆ werden die innerhalb liegenden Abschnitte 9 nach außen gedrückt, was eine entsprechende radiale Einwärtsbewebung der nach außen vorstehenden Umfangsabschnitte 10 zur Folge hat. Bei einer erforderlichen Abstimmung der beiden Umfangskonturen der Ausnehmung 7 und der Hülse 6 wird ein Verformungszustand der Hülse erreicht, bei dem sich die gesamte dann etwa kreisförmige äußere Umfangskontur der Hülse 6 innerhalb der kreisförmigen Umfangskontur des Ausschnittes 7 befindet. In diesem Zustand kann die Hülse 6 in die Ausnehmung 7 eingeschoben werden. Durch Beendigung der Einwirkung der Kräfte K₄, K₅, K₆ erfolgt auch hier eine Rückverformung der Hülse 6 aufgrund ihrer elastischen Materialeigenschaften, was eine dauerhafte Anpressung der vorstehenden Bereiche 10 gegen die entsprechenden Innenwandbereiche der Ausnehmung 7 bewirkt.

Das erfindungsgemäße Verbindungssystem kann zur Verbindung von unterschiedlich geformten Bauteilen, insbesondere auch von mehreckigen Bauteilen, angewandt werden, wobei die Umfangskonturen beider Bauteile so aufeinander abgestimmt werden müssen, daß durch eine gezielte elastische Verformung des einen Bauteils ein gegenseitiger Eingriff ermöglicht wird, wobei durch die selbsttätige elastische Rückverformung dieses Bauteils dann eine feste Klemmverbindung ohne jegliche Relativbewegung und damit auch ohne Reibungskräfte der zusammenwirkenden Kontaktflächen zustande kommt.

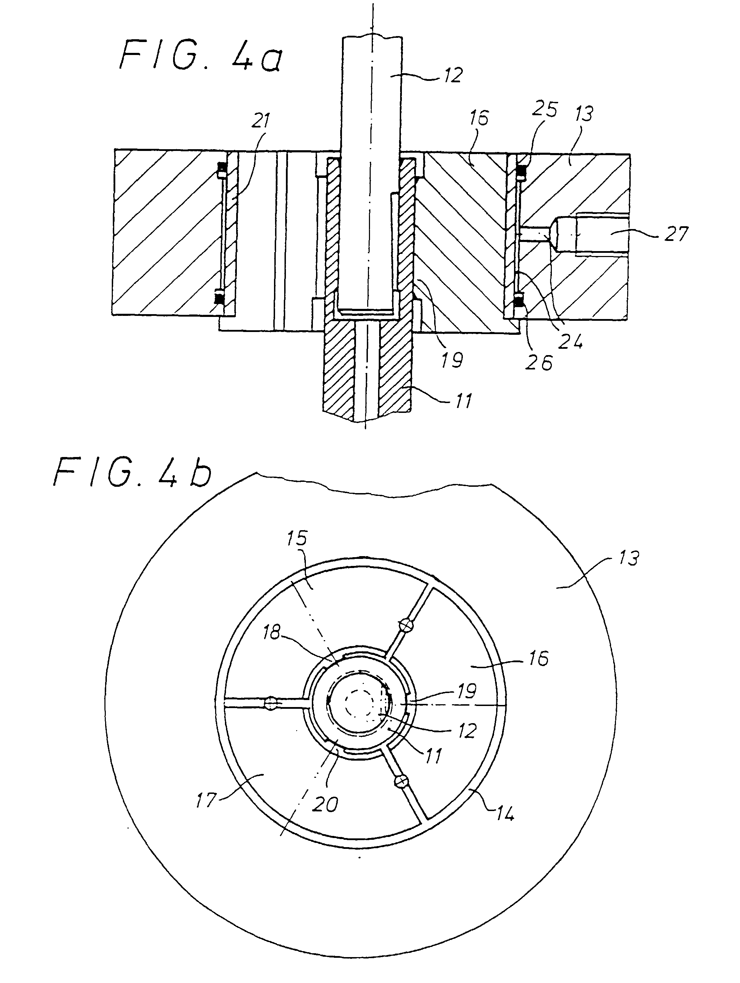

Die in den Fig. 4a und 4b dargestellte Vorrichtung ist zur praktischen Verwirklichung des in den Fig. 1 und 3 dargestellten technischen Konzeptes ausgebildet, wobei der hülsenförmige Endabschnitt eines Bauteils 11 auf dem Endteil eines zylindrischen Schaftes 12 befestigt werden soll. Die Vorrichtung weist ein zylindrisches Gehäuse 13 auf, in dessen zentraler Ausnehmung drei um jeweils 120° gegeneinander winkelversetzte Klemmbacken 15, 16, 17 angeordnet sind. Jede Klemmbacke 15 bis 17 weist je einen radial inneren Ansatz 18, 191 20 auf, dessen axiale Länge gemäß Fig. 4a die axiale Länge des Verbindungsabschnittes bestimmt. Zwischen der Außenwandung der Klemmbacken 15, 16, 17 und dem Gehäuse 13 ist ein Dehnring 21 angeordnet, der mit Hydraulikflüssigkeit gefüllte Druckkammern 24 nach radial innen begrenzt, die im Gehäuse angeordnet und durch Dichtungselemente 25, 26 abgedichtet sind. Zur Erzeugung eines nach radial innen wirkenden hydraulischen Druckes sind im Gehäuse 13 radiale Stellglieder in Form von Schraubbolzen 27 angeordnet, durch deren Betätigung ein hydraulischer Druck in den Druckkammern 24 auf- und abgebaut werden kann. Das Einschrauben der abgedichteten Gewindebolzen 27 führt zum Aufbau eines hydraulischen Druckes in den Kammern 24, durch den die Klemmbacken 15 bis 17 mit ihren radial inneren Ansätzen 18 bis 20 gegen die vorbestimmten Umfangsabschnitte der Hülsenwandung gedrückt werden, wodurch die anhand der Fig. 1, 3 erläuterte Verformung der Hülse erfolgt. Eine Rückdrehung der Schraubbolzen 27 bewirkt eine Druckentlastung in den Kammern 24 und damit eine Rückverformung der vorgegebenen Hülsenwandabschnitte mit den vorstehend anhand der Fig. 1 und 3 erläuterten technischen Effekten.

Statt der hydromechanischen Zustellung der Klemmbacken können auch andere in geeigneter Weise wirkende Spannmittel eingesetzt werden. Insbesondere bei dem in Fig. 2 dargestellten Verbindungssystem können die von innen nach radial außen auf die Rohrwandung einwirkenden Kräfte K₄, K₅ und K₆ beispielsweise durch einen zentralen Konus erzeugt werden, der von drei Klemmbacken mit konischen Innenflächen umgeben ist und durch eine Axialverschiebung diese Klemmbacken in der Wirkrichtung der Kräfte K₄, K₅, K₆ gegen die Innenwandung des Hohlkörpers 6 drückt. Die polygonähnliche Umfangskontur des verformbaren Bauteils kann durch spanend-abtragende Bearbeitung hergestellt werden, wobei die in den Figuren 1 bis 3 dargestellte unterschiedliche Wandstärke entsteht, d.h. die Wandstärke des hohlzylindrischen Bauteils 1 bzw. 6 ist in den der Krafteinwirkung ausgesetzten Umfangsabschnitten 3, 9 geringer als in den nach der Rückverformung an die Wandung des Gegenbauteils 2, 8 angepreßten Umfangsabschnitten 4, 10. Die polygonähnliche Umfangskontur kann jedoch auch durch Druckumformung z.B. in Pressen hergestellt werden, wobei in diesem Fall die Wandstärke des Hohlkörpers über den Umfang in etwa gleich bleiben kann.

## Patentansprüche

1. Verbindungssystem bestehend aus zwei Bauteile zum wiederholbaren festen Verbinden der Bauteile, bei dem ein Bauteil (1, 6) während des Verbindungsvorganges zeitweise so verformt wird, daß eine wirksame Umfangskontur der entsprechenden wirksamen Umfangskontur des anderen Bauteils (2, 8) mit vorgegebenem Spiel entspricht, und bei dem nach dem Positioniervorgang beider Bauteile (1, 6; 2, 8) durch zumindest teilweise Rückverformung eine feste Druckanlage der beiden wirksamen Umfangskonturen erfolgt,
dadurch gekennzeichnet,
daß die ursprüngliche Umfangskontur des verformbaren Bauteils (1, 6) innerhalb und außerhalb der Umfangskontur (5) des anderen Bauteils (2, 8) liegende Abschnitte (3, 4) aufweist,
daß die Verformung des zumindest einen Bauteils (1, 6) durch gezielte Einwirkung von radialen Druckkräften K₁, K₂, K₃ auf bestimmte Abschnitte der Umfangskontur des verformbaren Bauteils erfolgt und daß die feste gegenseitige Druckanlage beider Umfangskonturen in vorbestimmten Umfangsabschnitten durch elastische Rückverformung des verformbaren Bauteils (1, 6) erfolgt.

2. Verbindungssystem nach Anspruch 1 zum Befestigen eines als verformbares Bauteil (1) ausgebildeten Hohlkörpers auf einem massiven Schaft (2),
dadurch gekennzeichnet, daß
der Hohlkörper (1) eine mehrseitige innere Umfangskontur mit bogenförmigen inneren Umfangsabschnitten (4) und gewölbten äußeren Übergangsabschnitten (3) aufweist und bis zur Kongruenz mit der äußeren Umfangskontur (5) des massiven Schaftes (2) elastisch verformbar ist.

3. Verbindungssystem nach Anspruch 2,
dadurch gekennzeichnet, daß
der Hohlkörper (1) als zylindrische Hülse ausgebildet ist und der Schaft (2) eine zylindrische Umfangskontur aufweist, wobei die wirksame innere Umfangskontur der Hülse (1) aus drei flachgewölbten Umfangsabschnitten (4) und drei zwischenliegenden Übergangsbögen (3) besteht und durch nach radial innen auf die Übergangsbögen (3) einwirkende Radialkräfte K₁, K₂, K₃ etwa zur Kreisform verformbar ist, wobei der größte Durchmesser der Umfangskontur der verformten Hülse (1) geringfügig größer als der Durchmesser des Schaftes (2) ist.

4. Verbindungssystem nach Anspruch 1 zum Befestigen eines das verformbare Bauteil bildenden Hohlkörpers in einer Ausnehmung eines Bauteils,
dadurch gekennzeichnet, daß
die äußere ursprüngliche Umfangskontur des Hohlkörpers (6) die innerhalb und außerhalb der Umfangskontur der Ausnehmung (7) liegenden Abschnitt (9, 10) aufweist und durch auf die innerhalb liegenden Abschnitte (9) ausgeübten nach radial außen wirkenden Radialkräfte K₄ bis K₆ verformbar ist.

5. Verbindungssystem nach einem der Ansprüche 1 bis 4,
dadurch gekennzeichnet, daß
die wirksamen Umfangskonturen der beiden Bauteile (1, 2; 6, 8) viereckig oder polygonähnlich mit bogenförmigen Abschnitten (3, 4; 9, 10) sind.

6. Verbindungssystem nach einem der Ansprüche 1 bis 5,
dadurch gekennzeichnet, daß
das verformbare hohlzylindrische Bauteil (1, 6) in den der radialen Krafteinwirkung ausgesetzten Abschnitten (3, 9) eine verringerte Wandstärke aufweist.

7. Verfahren zum lösbaren festen Verbinden zweier Bauteile, bei welchem
- zumindest eines der Bauteile während des Verbindungsvorganges durch Radialkräfte verformt und gegenüber dem anderen Bauteil in der vorgesehenen Verbindungslage positioniert wird und
- durch eine anschließende elastische Rückverformung dieses verformten Bauteils die feste Verbindung hergestellt wird,
dadurch gekennzeichnet, daß
- die Umfangskontur des verformbaren Bauteils mit innerhalb und außerhalb der wirksamen Umfangskontur des anderen Bauteils liegenden Umfangsabschnitten versehen wird,
- Radialkräfte K auf vorbestimmte Umfangsabschnitte der Umfangskontur des verformbaren Bauteils ausgeübt werden, so daß seine wirksame Umfangskontur der wirksamen Umfangskontur des anderen Bauteils mit vorgegebenem Spiel entspricht, und
- nach der Positionierung der beiden Bauteile die den Radialkräften nicht ausgesetzten Umfangsabschnitte durch elastische Rückverformung des verformten Bauteils in feste Druckanlage mit der Umfangskontur des anderen Bauteils gebracht werden.

8. Verfahren nach Anspruch 7 zum wiederholbaren Befestigen eines verformbaren Hohlkörpers auf einem Schaft,
dadurch gekennzeichnet, daß
- die innere Umfangskontur des Hohlkörpers mit innerhalb und außerhalb der wirksamen Umfangskontur des anderen Bauteils liegenden Umfangsabschnitten versehen wird und
- die Radialkräfte von außen nach innen gerichtet auf die außerhalb liegenden Umfangsabschnitte zur Einwirkung gebracht werden.

9. Verfahren nach Anspruch 7 zum wiederholbaren Befestigen eines elastisch verformbaren Hohlkörpers in einer Ausnehmung eines Bauteils,
dadurch gekennzeichnet, daß
- die äußere Umfangskontur des Hohlkörpers mit innerhalb und außerhalb der wirksamen Umfangskontur des anderen Bauteils liegenden Umfangsabschnitten versehen wird und
- die Radialkräfte von innen nach außen gerichtet auf die innerhalb liegenden Umfangsabschnitte zur Einwirkung gebracht werden.

10. Verfahren nach einem der Ansprüche 7 bis 9,
dadurch gekennzeichnet, daß
die polygonähnliche Umfangskontur des verformbaren Bauteils (1; 6) durch spanende Bearbeitung hergestellt wird.

11. Verfahren nach einem der Ansprüche 7 bis 9,
dadurch gekennzeichnet, daß
die polygonähnliche Umfangskontur des verformbaren Bauteils (1; 6) durch spanlose Druckverformung hergestellt wird.

12. Vorrichtung zum Befestigen eines verformbaren Hohlkörpers auf einem Schaft, bestehend aus
einem Gehäuse (13) mit einer zentralen Ausnehmung (14), mehreren in der Ausnehmung (14) gegeneinander winkelversetzt angeordneten Preßbacken (15 - 17) und einer Spannvorrichtung (24 - 27) zum zwangsweisen Verschieben der Preßbacken,
dadurch gekennzeichnet, daß
die Preßbacken (15 - 17) an ihrer inneren Umfangsfläche jeweils mindestens einen Ansatz (18 - 20) aufweisen,
der einen außerhalb der Umfangskontur der Ausnehmung (14) liegenden Umfangsabschnitt des Hohlkörpers (10) gegenüberliegt,
die Spannvorrichtung (24 - 27) zum Erzeugen eines nach radial innen auf die Preßbacken (15 - 17) einwirkenden Druckes hydromechanisch ausgebildet ist und die hydromechanisch ausgebildete Spannvorrichtung an der radialen Außenseite jeder Preßbacke (15 - 17) je eine hydraulische Druckkammer und je ein im Gehäuse (13) beweglich angeordnetes Stellglied (27) aufweist.

## Claims

1. A connecting system, consisting of two members, for the repeatable secure connection of the members, wherein during the connecting procedure, one member (1,6) is temporarily deformed in such a manner that an effective peripheral contour corresponds to the corresponding effective peripheral contour of the other member (2, 8) with given clearance, and wherein after positioning of both members (1, 6; 2, 8), firm pressure contact takes place between the two effective peripheral contours through at least partial return deformation, characterised in that the original peripheral contour of the deformable member (1, 6) has portions (3, 4) located within and exterior to the peripheral contour (5) of the other member (2, 8), in that deformation of the at least one member (1, 6) takes place through targeted action of radial pressure forces K₁, K₂, K₃ on certain portions of the peripheral contour of the deformable member, and in that the firm two-way pressure contact between both peripheral contours in predetermined peripheral portions takes place through resilient return deformation of the deformable member (1,6).

2. A connecting system in accordance with Claim 1 for securing a hollow body, in the form of a deformable member (1), on a solid shank (2), characterised in that the hollow body (1) has a multi-sided inner peripheral contour with curved inner peripheral portions (4) and arched outer peripheral portions, and is resiliently deformable to the point of congruence with the outer peripheral contour (5) of the solid shank (2).

3. A connecting system in accordance with Claim 2, characterised in that the hollow body (1) is in the form of a cylindrical sleeve and the shank (2) has a cylindrical peripheral contour, the effective inner peripheral contour of the sleeve (1) being composed of three flattop-arched peripheral portions (4) and three transition curves (3) which are located therebetween and being deformable approximately into a circular form by radial forces K₁, K₂, K₃ acting radially inwards upon the transition curves. the largest diameter of the peripheral contour of the deformed sleeve (1) being slightly larger than the diameter of the shank (2).

4. A connecting system in accordance with Claim 1 for securing a hollow body. forming the deformable member, in a cavity of a member. characterised in that the outer original peripheral contour of the hollow body (6) has portions (9, 10) located within and exterior to the peripheral contour of the cavity (7), and is deformable by radially outwards acting radial forces K₄ to K₆ acting upon the portions (9) lying within¹.

5. A connecting system in accordance with any one of Claims 1 to 4, characterised in that the effective peripheral contours of the two members (1, 2; 6, 8) are four-cornered or polygon-like with curved portions (3, 4; 9, 10).

6. A connecting system in accordance with any one of Claims 1 to 5, characterised in that the deformable hollow-cylindrical member (1, 6) is of reduced wall thickness in the portions (3, 9) subject to the radial force action.

7. A method for the detachable secure connection of two members. wherein
- during the connecting procedure, at least one of the members is deformed by radial forces and is positioned in the intended connection position with respect to the other member and
- the secure connection is produced through a subsequent resilient return deformation of this deformed member.
characterised in that
- the peripheral contour of the deformable member is provided with peripheral portions located within and exterior to the effective peripheral contour of the other member,
- radial forces K are exerted upon predetermined peripheral portions of the peripheral contour of the deformable member, so that its effective peripheral contour corresponds to the effective peripheral contour of the other member with given clearance, and
- after positioning of the two members, the peripheral portions not subject to the radial forces are brought - through resilient return deformation of the deformed member - into firm pressure contact with the peripheral contour of the other member.

8. A method in accordance with Claim 7 for repeatable securing of a deformable hollow body on a shank, characterised in that
- the inner peripheral contour of the hollow body is provided with peripheral portions located within and exterior to the effective peripheral contour of the other member and
- the radial forces are, directed from the exterior to the interior, made to act upon the externally-located peripheral portions.

9. A method in accordance with Claim 7 for repeatable securing of a resiliently deformable hollow body in a cavity of a member, characterised in that
- the outer peripheral contour of the hollow body is provided with peripheral portions located within and exterior to the effective peripheral contour of the other member and
- the radial forces are, directed from the interior to the exterior, made to act upon the peripheral portions located within.

10. A method in accordance with any one of Claims 7 to 9, characterised in that the polygon-like peripheral contour of the deformable member (1; 6) is produced by machining.

11. A method in accordance with any one of Claims 7 to 9, characterised in that the polygon-like peripheral contour of the deformable member (1; 6) is produced by non-cutting pressure deformation.

12. A device for securing a deformable hollow body on a shank, consisting of a housing (13) with a central cavity (14), a plurality of pressing jaws (15 - 17) angularly offset in the cavity (14) and a stressing arrangement (24 - 27) for enforced displacement of the pressing jaws, characterised in that the pressing jaws ( 15 - 17) each have at least one projection (18 - 20) at their inner peripheral area. this projection facing a hollow-body peripheral-portion located exterior to the peripheral contour of the cavity (14), the stressing arrangement (24 - 27) for producing a pressure which acts radially inwards upon the pressing jaws (15 - 17) is hydromechanical and the hydromechanical stressing arrangement has. at the radial outer-surface of each pressing jaw (15 - 17), an hydraulic pressure-chamber (13) and an adjusting member (27) which is movably arranged in the housing (13).

## Revendications

1. Système d'assemblage constitué par deux composants destinés à assembler de manière répétitive et ferme les composants, dans lequel un composant (1, 6) est temporairement déformé pendant l'opération d'assemblage de telle sorte qu'un contour périphérique actif correspond, avec un jeu déterminé, au contour périphérique actif correspondant de l'autre composant (2, 8), et dans lequel, après l'opération de positionnement des deux composants (1, 6 ; 2, 8) par déformation en retour au moins partielle, il se produit un appui ferme sous pression des deux contours périphériques actifs, caractérisé en ce que le contour périphérique initial du composant (1, 6) déformable présente des tronçons (3, 4) se trouvant à l'intérieur et à l'extérieur du contour périphérique (5) de l'autre composant (2, 8), en ce que la déformation dudit au moins un composant (1, 6) a lieu par effet ciblé de forces radiales K₁, K₂, K₃ sur des tronçons déterminés du contour périphérique du composant déformable, et en ce que l'appui ferme sous pression réciproque des deux contours périphériques a lieu dans des tronçons périphériques prédéterminés par déformation en retour élastique du composant (1, 6) déformable.

2. Système d'assemblage selon la revendication 1 pour fixer un corps creux réalisé sous forme de composant déformable sur une tige (2) massive, caractérisé en ce que le corps creux (1) présente un contour périphérique intérieur polygonal avec des tronçons périphériques (4) intérieurs en forme d'arcs et des tronçons de transition (3) extérieurs bombés et en ce qu'il est élastiquement déformable jusqu'à venir coïncider avec le contour périphérique (5) extérieur de la tige (2) massive.

3. Système d'assemblage selon la revendication 2, caractérisé en ce que le corps creux (1) est réalisé sous forme de douille cylindrique et en ce que la tige (2) présente un contour périphérique cylindrique, le contour périphérique intérieur actif de la douille (1) étant constitué par trois tronçons de périphérie (4) en forme d'arcs aplatis et trois arcs de transition (3) intermédiaires et étant déformable pour atteindre approximativement une forme circulaire grâce aux forces radiales K₁, K₂, K₃ agissant radialement à l'intérieur sur les arcs de transition (3), le plus grand diamètre du contour périphérique de la douille (1) déformée étant légèrement supérieur au diamètre de la tige (2).

4. Système d'assemblage selon la revendication 1 pour fixer un corps creux formant le composant déformable dans un évidement d'un composant, caractérisé en ce que le contour périphérique initial extérieur du corps creux (6) présente les tronçons (9, 10) se trouvant à l'intérieur et à l'extérieur du contour périphérique de l'évidement (7), et en ce qu'il est déformable grâce aux forces radiales K4 à K6 agissant radialement vers l'extérieur, exercées sur les tronçons (9) situés à l'intérieur.

5. Système d'assemblage selon l'une quelconque des revendications 1 à 4, caractérisé en ce que les contours périphériques actifs des deux composants (1, 2 ; 6, 8) sont rectangulaires ou similaires à des polygones avec des tronçons (3, 4 ; 9, 10) en forme d'arcs.

6. Système d'assemblage selon l'une quelconque des revendications 1 à 5, caractérisé en ce que le composant cylindrique creux (1, 6) déformable présente une épaisseur de paroi réduite dans les tronçons (3, 9) exposés aux effets de forces radiales.

7. Procédé d'assemblage ferme amovible de deux composants, dans lequel :
- au moins un des composants est déformé par des forces radiales pendant l'opération d'assemblage et est positionné par rapport à l'autre composant dans la position d'assemblage prévue, et
- l'assemblage ferme est établi grâce à une déformation en retour élastique consécutive de ce composant déformé,
caractérisé en ce que :
- le contour périphérique du composant déformable est pourvu de tronçons périphériques se trouvant à l'intérieur et à l'extérieur du contour périphérique actif de l'autre composant,
- des forces radiales K sont exercées sur des tronçons périphériques prédéterminés du contour périphérique du composant déformable de sorte que son contour périphérique actif correspond, avec un jeu prédéterminé, au contour périphérique actif de l'autre composant, et
- après le positionnement des deux composants, les tronçons périphériques qui ne sont pas exposés aux forces radiales sont amenés en appui ferme sous pression avec le contour périphérique de l'autre composant, par déformation en retour élastique du composant déformé.

8. Procédé selon la revendication 7 pour réaliser une fixation répétitive d'un corps creux déformable sur une tige, caractérisé en ce que :
- le contour périphérique intérieur du corps creux est muni de tronçons périphériques se trouvant à l'intérieur et à l'extérieur du contour périphérique actif de l'autre composant, et
- les forces radiales en orientation depuis l'extérieur vers l'intérieur sont appliquées pour agir sur les tronçons périphériques situés à l'extérieur.

9. Procédé selon la revendication 7 pour réaliser une fixation répétitive d'un corps creux déformable dans un évidement d'un composant, caractérisé en ce que :
- le contour périphérique extérieur du corps creux est muni de tronçons périphériques se trouvant à l'intérieur et à l'extérieur du contour périphérique actif de l'autre composant, et
- les forces radiales en orientation depuis l'intérieur vers l'extérieur sont appliquées pour agir sur les tronçons périphériques situés à l'intérieur.

10. Procédé selon l'une quelconque des revendications 7 à 9, caractérisé en ce que le contour périphérique similaire à un polygone du composant déformable (1 ; 6) est réalisé par usinage par enlèvement de matière.

11. Procédé selon l'une quelconque des revendications 7 à 9, caractérisé en ce que le contour périphérique similaire à un polygone du composant déformable (1 ; 6) est réalisé par déformation sous pression sans enlèvement de matière.

12. Dispositif de fixation d'un corps creux sur une tige, constitué par un boîtier (13) avec un évidement (14) central, plusieurs mâchoires de pression (15 à 17) agencées en décalage angulaire les unes par rapport aux autres dans l'évidement (14), et un dispositif de serrage (24 à 27) pour déplacer les mâchoires de manière forcée, caractérisé en ce que les mâchoires de pression (15 à 17) présentent sur leur surface périphérique intérieure au moins un prolongement (18 à 20) respectif qui est situé à l'opposé d'un tronçon périphérique du corps creux (10) situé à l'extérieur du contour périphérique de l'évidement (14), en ce que le dispositif de serrage (24 à 27) est réalisé de manière hydromécanique pour engendrer une pression agissant radialement vers l'intérieur sur les mâchoires (15 à 17), et en ce que le dispositif de serrage réalisé de manière hydromécanique présente sur le côté extérieur radial de chaque mâchoire (15 à 17) une chambre de pression hydraulique respective et un organe de réglage (27) respectif agencé mobile dans le boîtier (13).
